(19) Europäisches Patentamt
European Patent Office
Office européen des brevets

(11) **EP 2 540 541 A1**

(12) **EUROPEAN PATENT APPLICATION**
published in accordance with Art. 153(4) EPC

(43) Date of publication:
**02.01.2013 Bulletin 2013/01**

(21) Application number: **11747022.9**

(22) Date of filing: **22.02.2011**

(51) Int Cl.:
**B60H 1/32** (2006.01)

(86) International application number:
**PCT/JP2011/000986**

(87) International publication number:
**WO 2011/105051 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2010 JP 2010038515**

(71) Applicant: **Sanden Corporation**
**Isesaki-shi, Gunma 372-8502 (JP)**

(72) Inventor: **SUZUKI, Kenichi**
**Isesaki-shi**
**Gunma 372-8502 (JP)**

(74) Representative: **Haley, Stephen**
**Gill Jennings & Every LLP**
**The Broadgate Tower**
**20 Primrose Street**
**London EC2A 2ES (GB)**

(54) **VEHICLE AIR CONDITIONER DEVICE**

(57)     Disclosed is an air conditioning system for vehicles capable of operating control with a high degree of operating efficiency even in operating states wherein efficiency would be expected to decline, and while adhering to conventional control ideas. The air conditioning system for vehicles comprises a compressor that compresses a refrigerant; a condenser that condenses the compressed refrigerant; an expansion mechanism that expands the condensed refrigerant; an evaporator that evaporates the expanded refrigerant and brings the evaporated refrigerant into contact with air, cooling and dehumidifying the air; a blower that sends the air to the condenser; and a displacement control signal calculation means for determining a displacement control signal, using a displacement control signal calculation formula, which is to be inputted to the compressor from the outside. In the displacement control signal calculation means, a target air temperature at the evaporator exit is inputted, the displacement control signal is determined using the difference between the air temperature and the target air temperature at the evaporator exit when a displacement control signal calculated value is less than or equal to a predetermined value (A), and the displacement control signal is determined from the displacement control signal calculation formula when the displacement control signal calculated value is greater than the predetermined value (A).

FIG. 2

**Description**

Technical Field of the Invention

The present invention relates to a technology for controlling a displacement of a variable displacement compressor in an air conditioning system provided with a vapor compression type refrigeration cycle for vehicles, wherein a displacement control signal which is input from the outside to the variable displacement compressor is calculated as based on a target temperature of an air conditioning in an evaporator and is output.

Background Art of the Invention

Patent document 1 discloses a control device which is applicable to an automatic air conditioning system for vehicles. This control device has a target response calculation means for a controlled output, which calculates the target response of the controlled output to be designated so as to reach a target value in a transient state. Further, the control device has a feedforward control input estimation means for the target response of the controlled output and also has a controlled output feedback means to calculate a deviation between the target response of the controlled output and a present controlled output, wherein the controlled object is controlled by a control input obtained as a sum of the feedforward control input and the feedback control input.

Patent document 2 discloses an air conditioning device which can vary a discharge displacement of a compressor by an external control. This air conditioning device can control an evaporator exit air temperature made to reach a target value. However in a variable displacement compressor which can be controlled from the outside, a compressor efficiency might decrease by a compressor operation with a small displacement if a displacement control signal to be input from the outside is less or equal to a certain value. Further, because the air conditioning device is operated with a low flow rate, an expansion valve might fluctuate as causing an unstable displacement control.

Prior art documents

Patent documents

        Patent document 1: JP2003-191741-A
        Patent document 2: JP2001-073941-A

Summary of the Invention

Problems to be solved by the Invention

In an air conditioning system for vehicles having a variable displacement compressor capable of being controlled from the outside, because the compressor efficiency tends to decrease and to get unstable in a case that the displacement control signal is less or equal to a certain value, the coefficient of performance (COP) of a vapor compression cycle of an air conditioning system for vehicles might decrease so as to cause a bad effect on the fuel cost, etc, under a conventional control method. Therefore, it is important to properly control the compressor operation, to improve an operational efficiency of the compressor, and to stabilize its operation, for achieving a desirable air conditioning system for vehicles having a variable displacement compressor controlled from the outside.

Accordingly, focused on the above described object on the displacement control for an air conditioning system for vehicles, an object of the present invention is to provide an air conditioning system for vehicles, which is capable of being controlled with an excellent operational efficiency even under such an operation condition that the efficiency might decrease, as following a conventional control idea.

Means for solving the Problems

To achieve the above-described object, an air conditioning system for vehicles according to the present invention is an air conditioning system for vehicles, comprising a compressor for compressing a refrigerant, a condenser for condensing a compressed refrigerant, an expansion mechanism for expanding a condensed refrigerant, an evaporator for evaporating an expanded refrigerant so as to contact an air to be cooled and dehumidified, a blower for blowing an air to the condenser, and a displacement control signal calculation means for determining a displacement control signal according to a calculation formula for the displacement control signal to be input from an outside to the compressor in order to control a displacement in the compressor, characterized in that at least a target value of an air temperature at an evaporator exit is input to the displacement control signal calculation means, the displacement control signal is determined from a difference between an air temperature at the evaporator exit and the target value of the air temperature at the evaporator exit if a calculated value of the displacement control signal which is calculated according to the calculation formula for the displacement control signal is less or equal to a predetermined value A, and the displacement control signal is determined from the calculated value of the displacement control signal if the calculated value of the displacement control signal is more than the predetermined value A. Here, the air temperature at the evaporator exit implies a temperature of the air coming out from the evaporator, and alternatively, may sometimes imply a temperature of the air passing through the evaporator.

The air conditioning system for vehicles of the present invention makes it possible that the operation condition is made stable even when the compressor is operated in a small displacement, because the displacement control signal input to the compressor from the outside is determined by using a difference between the air temperature at the evaporator exit and the target value of the air temperature at the evaporator exit if the calculated value which is calculated by a predetermined calculation formula is less or equal to predetermined value A, and is determined by the calculation formula if the displacement control signal is more than predetermined value A.

In the air conditioning system for vehicles of the present invention, it is preferable that the displacement control signal is determined to be either a predetermined value m which corresponds to a minimum displacement in the compressor or a predetermined value B, if the calculated value of the displacement control signal is less or equal to the predetermined value A. Here, the predetermined value m is a displacement control signal to be selected to minimize the displacement in the compressor, and is usually set greater than the predetermined value A and B. Thus, when the compressor is operated with a small displacement wherein the calculated value of the displacement control signal is less or equal to the predetermined value A, the displacement control signal is determined to be either value of the predetermined value m corresponding to the minimum displacement of the compressor or the predetermined value B, so that the displacement control method is simplified and the operating condition is further stabilized.

It is preferable that the predetermined value B is determined according to a thermal load of the air conditioning system. Here, a physical parameter showing the thermal load of the air conditioning system may be outdoor temperature, indoor temperature, indoor humidity, airflow rate to the compressor, and insolation. If the predetermined value B is determined according to the thermal load in the air conditioning system, the displacement control method can be simplified and the displacement in the compressor can be controlled to the optimum value.

It is preferable that the predetermined value B is determined to be always more or equal to the predetermined value A. If the predetermined value B is more or equal to A at any time, the displacement control signal is prevented from an abrupt decrease even when the displacement control signal, which has been more than the predetermined value, decreases to a value less than the predetermined value A.

In the air conditioning system for vehicles of the present invention, it is preferable that the blower is stopped if the calculated value of the displacement control value is less or equal to the predetermined value A while the displacement control signal is equal to the predetermined value m, and that the blower is operated if the displacement control signal is equal to the predetermined value B. If such a simple binary control method for the compressor displacement during operating the compressor with a small displacement is applied to ON-OFF operation of the blower of the condenser, the control method of a whole air conditioning system is simplified and the air conditioning system can be operated more stably.

In the air conditioning system for vehicles of the present invention, it is preferable that an airflow rate of the blower is controlled according to a vehicle speed. For example, the blower may not be required to operate if ambient air is blown to the condenser while the vehicle is moving at a high speed, so as to save energy consumption. Specifically, it is preferable that the blower is stopped if the calculated value of the displacement control value is less or equal to the predetermined value A while vehicle speed is more or equal to a predetermined value C, and that the blower is operated if the vehicle speed is less than the predetermined value C.

In the air conditioning system for vehicles of the present invention, it is preferable that an airflow rate of the blower is controlled according to a torque of the compressor. Such a control makes it possible that the airflow rate is optimized according to the compressor torque even if the blower is subjected to ON-OFF operation.

In the air conditioning system for vehicles of the present invention, it is preferable that at least one physical parameter in a group consisting of an insolation, an outdoor temperature, an indoor temperature, an indoor humidity, an airflow rate to the compressor, a vehicle speed, and rotation speed of a vehicle engine is input to the displacement control signal calculation means. If at least one physical parameter among these physical quantities is input to the displacement control signal calculation means, the displacement control signal as an important control variable in the air conditioning system for vehicles of the present invention can be determined as suitable to environments in which the air conditioning system is mounted.

Effect according to the Invention

An air conditioning system for vehicles according to the present invention makes it possible that the air conditioning system for vehicles provided with a variable displacement compressor capable of being controlled from the outside is improved in an efficiency and a vehicle fuel cost even under an operation condition where the compressor operational efficiency might decrease. Further, a vapor compression type refrigeration cycle provided with a variable displacement compressor capable of being controlled from the outside can be operated further stably, and a drive torque of the compressor can be suppressed from fluctuating.

Brief explanation of the drawings

[Fig. 1] Fig. 1 is a flow diagram of a whole air conditioner for vehicles according to the present invention.
[Fig. 2] Fig. 2 is an example of a control flow diagram of the air conditioner for vehicles in Fig.1.
[Fig. 3] Fig. 3 is another example of a control flow diagram of the air conditioner for vehicles in Fig.1.
[Fig. 4] Fig. 4 is yet another example of a control flow diagram of the air conditioner for vehicles in Fig.1.
[Fig. 5] Fig. 5 is a characteristic diagram showing a relation between a volumetric efficiency of Compressor 4 in Fig. 1 and a displacement control signal.
[Fig. 6] Fig. 6 is a characteristic diagram showing a relation between a torque of Compressor 4 in Fig. 1 and a displacement control signal.

Embodiments for carrying out the Invention

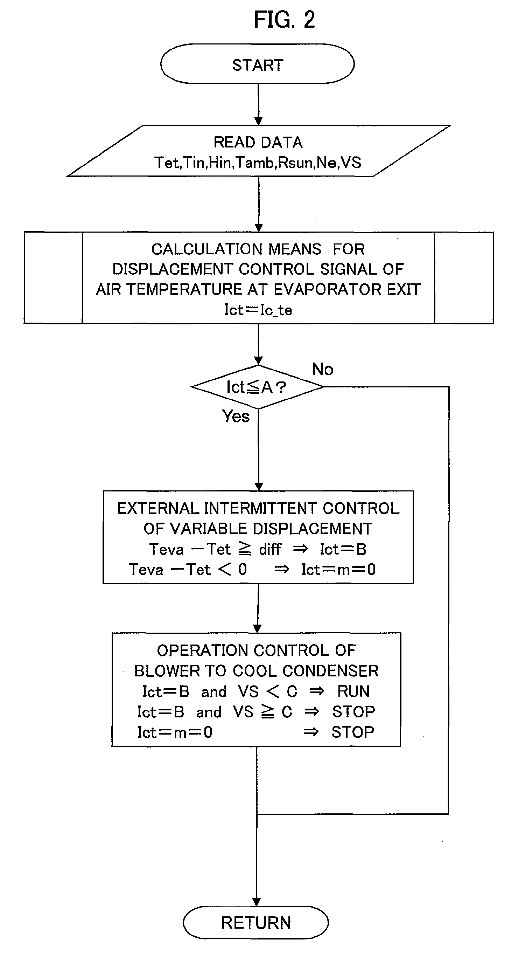

Hereinafter, desirable embodiments will be explained as referring to figures.

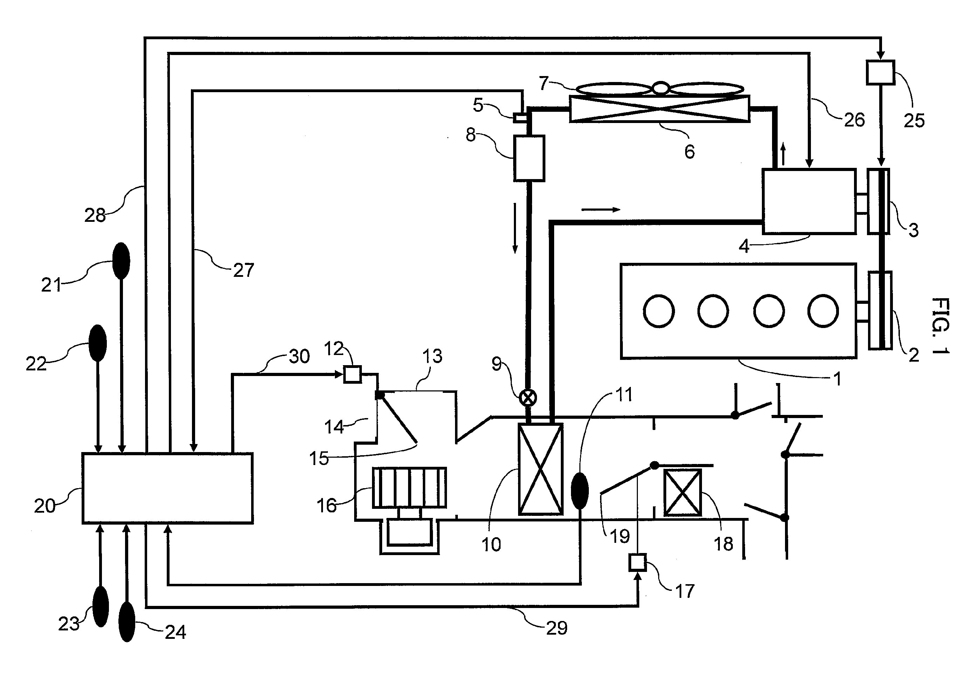

Fig. 1 is a flow diagram of a whole air conditioner for vehicles according to an embodiment of the present invention, in which a whole mechanical component part of a refrigeration cycle as an air conditioning system for vehicles is shown. Air conditioner 31 comprises a refrigeration cycle and a draft cycle, the refrigeration cycle being provided with Compressor 4, Condenser 6, Liquid receiver tank 8, Expansion device 9 and Evaporator 10, etc., and the draft cycle being provided with Outdoor air inlet 13, Indoor air inlet 14, Indoor/outdoor air-switching damper 15, Blower 16, heater 18 and Air mix damper 19, etc. The rotative power is transmitted from Engine 1 as a drive source to Compressor 4 through Pulleys 2 and 3, while the transmission and cutoff of the rotative power are controlled by Clutch controller 25. A signal corresponding to Evaporator 4 exit air temperature (air conditioning temperature) is input from Evaporator exit air-temperature sensor 11 to Air conditioner controller 20. Air conditioner controller 20 reads an output signal of Evaporator exit air-temperature sensor 11, and then outputs Compressor displacement control signal 26 to Compressor 4. Thus, in order to keep the exit air temperature of Evaporator 4 at a predetermined temperature, Air conditioner controller 20 calculates Compressor displacement control signal 26 by a displacement control signal calculation device incorporated therein, so as to control the displacement of Compressor 4 from the outside of the compressor. Further, an environmental information signal is input to Air conditioner controller 20 from Outdoor temperature sensor 21, Insolation sensor 22, Indoor temperature sensor 23 and Indoor humidity sensor 24, etc.
Refrigerant used for the refrigeration cycle in Air conditioner 31 for vehicles may be carbon dioxide or fluorocarbon refrigerant. Expansion device 9 may be electronic expansion valve, thermal expansion valve or differential-pressure expansion valve. Further, Air conditioner 31 for vehicles in Fig. 1 is provided with a clutch, and alternatively, may be provided without a clutch in the present invention. Furthermore, Compressor 4 in Fig. 1 is a compressor driven by Engine 1, and alternatively, may be a compressor driven by an electric motor in the present invention.
Hereinafter, embodiments of control flow (Examples 1-3) for Air conditioner 31 for vehicles in Fig. 1 will be explained as referring to Figs. 2-4.

Example 1

Fig. 2 is an example of a control flow diagram of Air conditioner 31 for vehicles in Fig.1.

1-1.

Target value of air temperature at evaporator exit (Tet), Indoor temperature (Tin), Indoor humidity (Hin), Outdoor temperature (Tamb), Insolation (Rsun), Engine rotation speed (Ne) and Vehicle speed (VS) are detected and read in.

1-2.

A calculation means of displacement control signal for air temperature at evaporator exit calculates Displacement control signal for air temperature at evaporator exit (Ict_te), which is provisionally employed as an external variable displacement control signal. (Ict = Ict_te)

Here, the calculation means of displacement control signal for air temperature at evaporator exit consists of the following means: (Target response control means for air temperature at evaporator exit; Feedforward control input estimation means for air temperature at evaporator exit; and Feedback control input calculation means for air temperature at evaporator exit)

1-2-1. Target response control means for air temperature at evaporator exit

Target response for air temperature at evaporator exit (Tef) is calculated by the following formula as referring to Target air temperature at evaporator exit (Tet).

$$Tef = (TL1 \ x \ Tet + Tc1 \ x \ Tef(Previous \ value)) \ / \ (Tc1 + TL1)$$

TL1: Control period
Tc1: Designated response for air temperature at evaporator exit

1-2-2. Feedforward control input estimation means for air temperature at evaporator exit

Feedforward control input for air temperature at evaporator exit (Icff_te) is estimated by the following formula, as referring to Target feedforward for air temperature at evaporator exit (Tetc), Outdoor temperature (Tamb), Vehicle speed (VS), Blower voltage (BLV) and Engine rotation speed (Ne).

$$Icffte = f(Tetc, \ Tamb, \ Ne, \ VS, \ BLV)$$

Here, Target feedforward for air temperature at evaporator exit (Tetc) is calculated by the following formula, as referring to Target air temperature at evaporator exit (Tet).

$$Tetc = (TL2 \ x \ Tet + Tcte \ x \ Tetc(Previous \ value)) \ / \ (Tcte + TL2)$$

TL2: Control period
Tcte: Designated feedforward for air temperature at evaporator exit

1-2-3. Feedback control input calculation means for air temperature at evaporator exit

Feedback control input for air temperature at evaporator exit (Icfb_te) is obtained by the proportion calculation and the integration calculation as follows, as referring to Target response for air temperature at evaporator exit (Tef) and Air temperature at evaporator exit (Teva).

$$Icfb\_te = Pte(Result \ of \ proportion \ calculation) + Ite(Result \ of \ integration \ calculation)$$

$$Pte = Kp1 \ x \ (Teva - Tef)$$

$$Ite = Ite\_n\text{-}1 + Kp1 \,/\, Ti1 \;x\; (Teva - Tef)$$

Kp1: Proportion gain
Ti1: Integration calculation time
Ite_n-1: Previous result of Ite calculation

Displacement control signal for air temperature at evaporator exit (Ict_te) is calculated as using the above described calculation results by the following formula.

$$Ict\_te = Icff\_te + Icfb\_te$$

1-3.

The following conditional judgment is carried out with Displacement control signal for air temperature at evaporator exit (Ict_te).

[Condition 1-1]

If the relation of Ict $\leq$ A is satisfied, the step is transited to the next external intermittent control of variable displacement.
If the relation of Ict > A is satisfied, the external intermittent control of variable displacement is carried out while keeping the relation of Ict = Ict_te, and then the step returns to the beginning (1-1.) of the flow.

1-4.

The variable displacement compressor controlled from the outside is intermittently controlled to operate under the following condition by the external intermittent control of variable displacement.

[Condition 1-2]

Ict = B $\geq$ 0.3 [A], if the relation of Teva - Tet $\geq$ diff is satisfied.
Ict = m (displacement control signal corresponding to the minimum displacement) = 0, if the relation of Teva-Tet < 0 is satisfied.

Teva: Air temperature at evaporator exit
Tet: Target air temperature at evaporator exit
diff: Predetermined value

1-5.

Condenser cooling blower 7 is controlled to operate under the following condition.

[Condition 1-3]

Condenser cooling blower 7 is operated, if the relation of Ict = B and VS < C is satisfied.
Condenser cooling blower 7 is stopped, if the relation of Ict = B and VS $\geq$ C is satisfied.
Condenser cooling blower 7 is stopped, if the relation of Ict = 0 is satisfied.
VS: Vehicle speed

1-6.

The step returns to the beginning (1-1.) of the flow.

Example 2

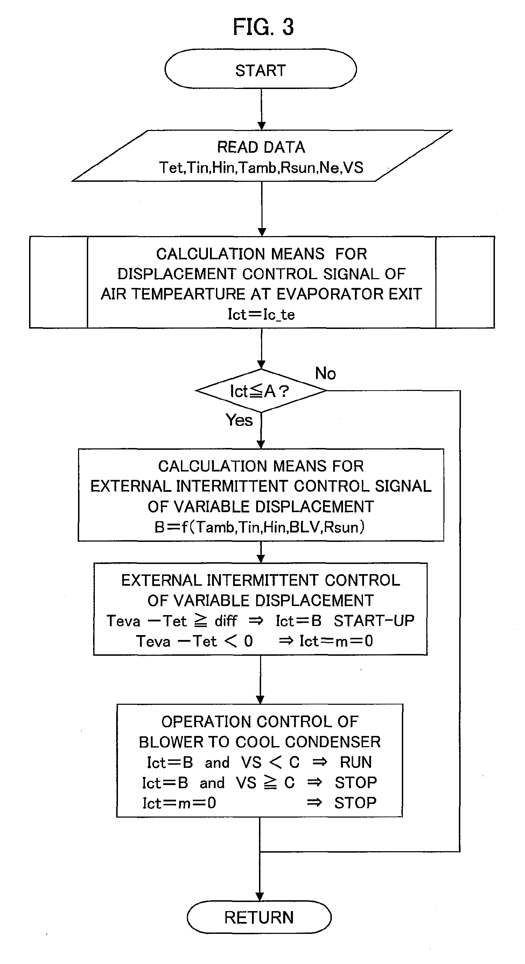

Fig. 3 is another example of a control flow diagram of Air conditioner 31 for vehicles in Fig.1.

2-1.

Target air temperature at evaporator exit (Tet), Indoor temperature (Tin), Indoor humidity (Hin), Outdoor temperature (Tamb), Insolation (Rsun), Engine rotation speed (Ne) and Vehicle speed (VS) are detected and read in.

2-2.

A calculation means of displacement control signal for air temperature at evaporator exit calculates Displacement control signal for air temperature at evaporator exit (Ict_te), which is provisionally employed as an external variable displacement control signal. (Ict = Ict_te)

2-3.

The following conditional judgment is carried out with Displacement control signal for air temperature at evaporator exit (Ict_te).

[Condition 2-1]

If the relation of Ict $\leq$ A is satisfied, the step is transited to the next external intermittent control of variable displacement.
If the relation of Ict > A is satisfied, the external intermittent control of variable displacement is carried out while keeping the relation of Ict = Ict_te, and then the step returns to the beginning (2-1.) of the flow.

2-4.

External intermittent control signal (B) of variable displacement is calculated by the following formula in the calculation means for external intermittent control signal of variable displacement.

$$B = f(Tamb,\ Tin,\ Hin,\ BLV,\ Rsun)$$

BLV: Physical parameter correlating with the airflow rate (voltage to be applied to the blower, for example).

2-5.

The variable displacement compressor controlled from the outside is intermittently controlled to operate under the following condition by the external intermittent control of variable displacement.

[Condition 2-2]

Ict = B $\geq$ 0.3 [A], if the relation of Teva - Tet $\geq$ diff is satisfied.
Ict = m (Displacement control signal corresponding to the minimum displacement) = 0, if the relation of Teva - Tet < 0 is satisfied.

Teva: Air temperature at evaporator exit
Tet: Target air temperature at evaporator exit
diff: Predetermined value

2-6.

Condenser cooling blower 7 is controlled to operate under the following condition.

[Condition 2-3]

Condenser cooling blower 7 is operated, if the relation of Ict = B and VS < C is satisfied.
Condenser cooling blower 7 is stopped, if the relation of Ict = B and VS $\geq$ C is satisfied.
Condenser cooling blower 7 is stopped, if the relation of Ict = 0 is satisfied.
VS: Vehicle speed

2-7.

The step returns to the beginning (2-1.) of the flow.

Example 3

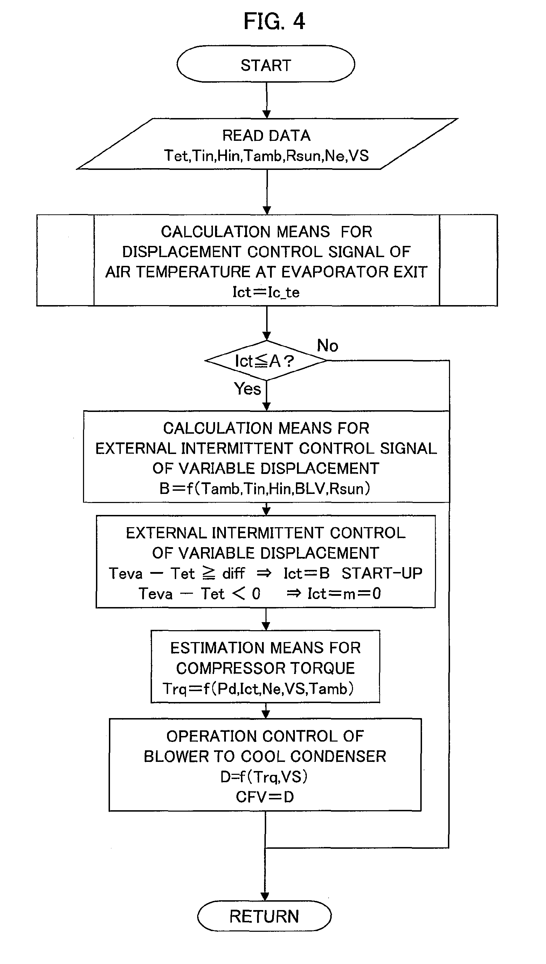

Fig. 4 is yet another example of a control flow diagram of Air conditioner 31 for vehicles in Fig.1.

3-1.

Target value of evaporator exit air temperature (Tet), Indoor temperature (Tin), Indoor humidity (Hin), Outdoor temperature (Tamb), Insolation (Rsun), Engine rotation speed (Ne) and Vehicle speed (VS) are detected and read in.

3-2.

A calculation means of displacement control signal for air temperature at evaporator exit calculates Displacement control signal for air temperature at evaporator exit (Ict_te), which is provisionally employed as an external variable displacement control signal. (Ict = Ict_te)

3-3.

The following conditional judgment is carried out with Displacement control signal for air temperature at evaporator exit (Ict_te).

[Condition 3-1]

If the relation of Ict $\leq$ A is satisfied, the step is transited to the next external intermittent control of variable displacement.
If the relation of Ict > A is satisfied, the external intermittent control of variable displacement is carried out while keeping the relation of Ict = Ict_te, and then the step returns to the beginning (3-1.) of the flow.

3-4.

External intermittent control signal (B) of variable displacement is calculated by the following formula in the calculation means for external intermittent control signal of variable displacement.

$$B = f(Tamb, Tin, Hin, BLV, Rsun)$$

BLV: Physical parameter correlating with the airflow rate (Voltage to be applied to the blower, for example).

3-5.

The variable displacement compressor controlled from the outside is intermittently controlled to operate under the following condition by the external intermittent control of variable displacement.

[Condition 3-2]

Ict = B $\geq$ 0.3 [A], if the relation of Teva - Tet $\geq$ diff is satisfied.
Ict = m (Displacement control signal corresponding to the minimum displacement) = 0, if the relation of Teva -

Tet < 0 is satisfied.

> Teva: Air temperature at evaporator exit
> Tet: Target air temperature at evaporator exit
> diff: Predetermined value

3-6.

The drive torque of the compressor is estimated by a compressor torque estimation means. Here, the following torque estimation formula is just an example, and therefore any of signal parameters in the right-hand side may be omitted.

$$\mathrm{Trq} = f(\mathrm{Pd,\ Ict,\ Ne,\ VS,\ Tamb})$$

> Pd: Pressure of refrigeration cycle at high-pressure side
> Trq: Estimated torque of compressor

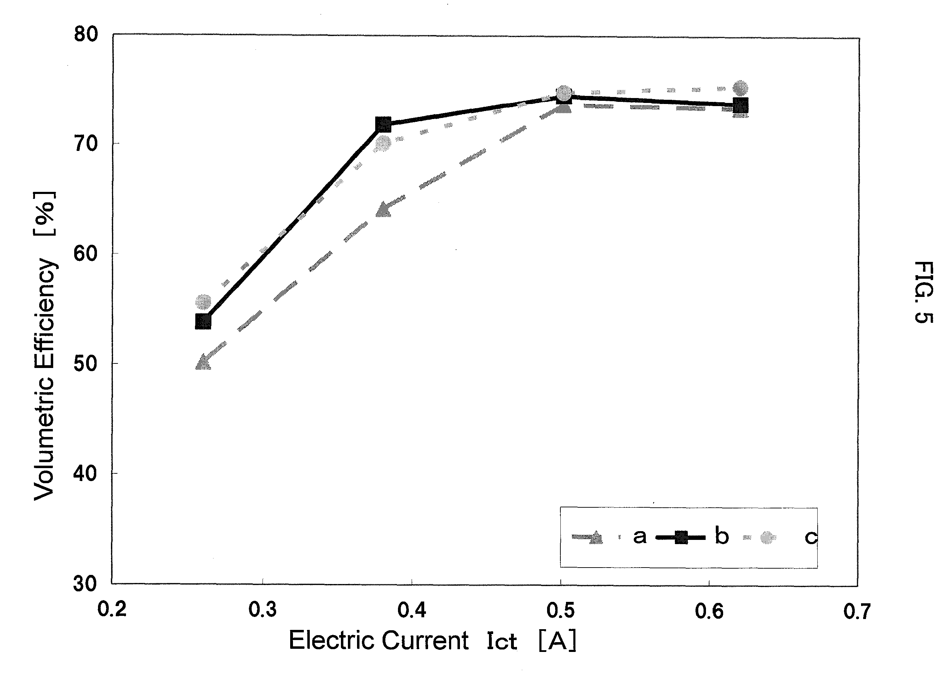

Fig. 5 shows a relation between a volumetric efficiency and a displacement control signal (Ict as an electric current) of the compressor, where Conditions a-c are experimental data in different engine rotation speeds (Ne: a-c), respectively. Because it is generally preferable that a compressor is operated under a condition where a volumetric efficiency is at high level, a compressor having characteristics shown in Fig. 5 could be operated with a high efficiency if the displacement control signal has an electric current of 0.3 [A], for example.

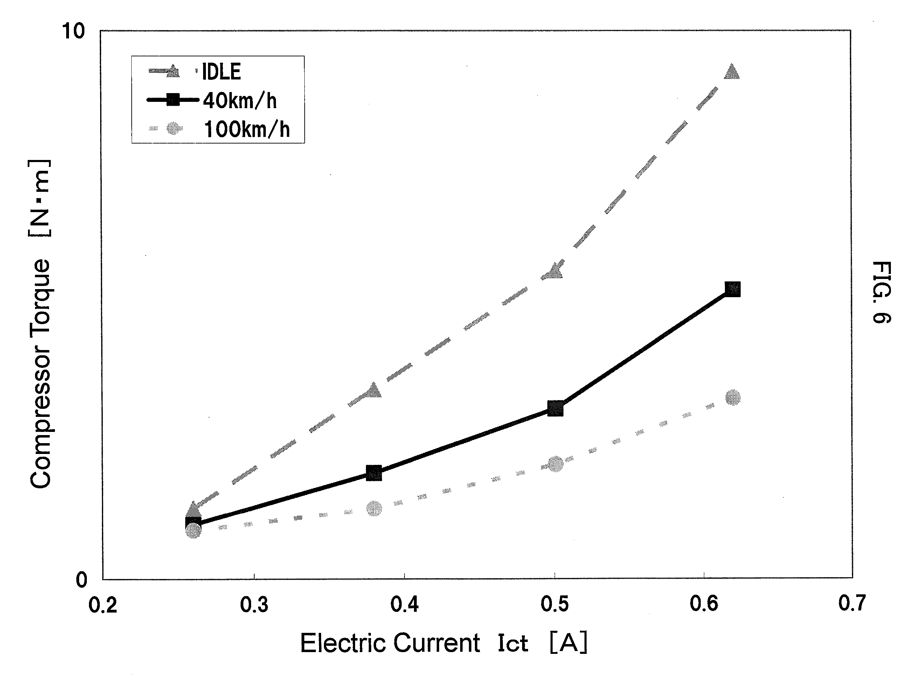

Fig. 6 shows a relation between a torque and a displacement control signal (Ict as an electric current) of the compressor, where experimental data in conditions of different vehicle speed (VS: 0km/h[IDLE] - 100km/h) are shown, respectively. Fig. 6 corresponds to a graph of a torque estimation formula shown in 3-6., as a function of Ict with a parameter of VS, while Ne and Tamb are constant.

3-7.

Condenser cooling blower 7 is controlled to operate according to a target operational parameter which has been calculated from Estimated compressor torque (Trq) and Vehicle speed (VS). Here, the target operational parameter is a target motor voltage for driving to rotate Condenser cooling blower 7, as a physical parameter correlating with a rotation speed of Condenser cooling blower 7.

$$D = f(\mathrm{Trq,\ VS})$$

$$\mathrm{CFV} = D$$

CFV: Target voltage of condenser cooling blower

3-8.

The step returns to the beginning (3-1.) of the flow.

The variable displacement compressor capable of being controlled from the outside has been employed as a compressor in examples 1-3, and alternatively, an electric compressor is applicable to a similar control method. In a case where an electric compressor is employed, the electric compressor may be controlled in a rotation speed by the above-described displacement control signal.

Industrial Applications of the Invention

An air conditioning system for vehicles according to the present invention is applicable to an air conditioning system for vehicles, which employs a vapor compression type refrigeration cycle and is provided with a compressor of which displacement is controlled from the outside.

Explanation of symbols

1: Engine
2,3: Pulley
4: Compressor
5: High-pressure side pressure detection means
6: Condenser
7: Condenser cooling blower
8: Liquid receiver tank
9: Expansion device
10: Evaporator
11: Evaporator exit air-temperature sensor
12: Actuator of indoor/outdoor air-switching damper
13: Outdoor air inlet
14: Indoor air inlet
15: Indoor/outdoor air-switching damper
16: Blower
17: Actuator of air mix damper
18: Heater
19: Air mix damper
20: Air conditioner controller
21: Outdoor temperature sensor
22: Insolation sensor
23: Indoor temperature sensor
24: Indoor humidity sensor
25: Clutch controller
26: Compressor displacement control signal
27: High-pressure side refrigerant pressure
28: Clutch control signal
29: Air mix damper control signal
30: Indoor/outdoor air-switching damper control signal
31: Air conditioner

**Claims**

1. An air conditioning system for vehicles, comprising a compressor for compressing a refrigerant, a condenser for condensing a compressed refrigerant, an expansion mechanism for expanding a condensed refrigerant, an evaporator for evaporating an expanded refrigerant so as to contact an air to be cooled and dehumidified, a blower for blowing an air to said condenser, and a displacement control signal calculation means for determining a displacement control signal according to a calculation formula for said displacement control signal to be input from an outside to said compressor in order to control a displacement in said compressor, **characterized in that**
at least a target value of an air temperature at an evaporator exit is input to said displacement control signal calculation means, said displacement control signal is determined from a difference between an air temperature at said evaporator exit and said target value of said air temperature at said evaporator exit if a calculated value of said displacement control signal which is calculated according to said calculation formula for said displacement control signal is less or equal to a predetermined value A, and said displacement control signal is determined from said calculated value of said displacement control signal if said calculated value of said displacement control signal is more than said predetermined value A.

2. The air conditioning system for vehicles according to claim 1, wherein said displacement control signal is determined to be either a predetermined value m which corresponds to a minimum displacement in said compressor or a predetermined value B, if said calculated value of said displacement control signal is less or equal to said predetermined value A.

3. The air conditioning system for vehicles according to claim 2, wherein said predetermined value B is determined according to a thermal load of said air conditioning system.

4. The air conditioning system for vehicles according to claim 2 or 3, wherein said predetermined value B is determined to be always more or equal to said predetermined value A.

5. The air conditioning system for vehicles according to any of claims 2 to 4, wherein said blower is stopped if said calculated value of said displacement control value is less or equal to said predetermined value A while said displacement control signal is equal to said predetermined value m, and said blower is operated if said displacement control signal is equal to said predetermined value B.

6. The air conditioning system for vehicles according to any of claims 1 to 5, wherein an airflow rate of said blower is controlled according to a vehicle speed.

7. The air conditioning system for vehicles according to claim 6, wherein said blower is stopped if said calculated value of said displacement control value is less or equal to said predetermined value A while vehicle speed is more or equal to a predetermined value C, and said blower is operated if said vehicle speed is less than said predetermined value C.

8. The air conditioning system for vehicles according to any of claims 1 to 7, wherein an airflow rate of said blower is controlled according to a torque of said compressor.

9. The air conditioning system for vehicles according to any of claims 1 to 8, wherein at least one physical parameter in a group consisting of an insolation, an outdoor temperature, an indoor temperature, an indoor humidity, an airflow rate to said compressor, a vehicle speed, and rotation speed of a vehicle engine is input to said displacement control signal calculation means.

FIG. 1

## FIG. 2

START

READ DATA
Tet,Tin,Hin,Tamb,Rsun,Ne,VS

CALCULATION MEANS FOR
DISPLACEMENT CONTROL SIGNAL OF
AIR TEMPERATURE AT EVAPORATOR EXIT
$Ict = Ic\_te$

$Ict \leqq A$ ?

No

Yes

EXTERNAL INTERMITTENT CONTROL
OF VARIABLE DISPLACEMENT
$Teva - Tet \geqq diff \Rightarrow Ict = B$
$Teva - Tet < 0 \Rightarrow Ict = m = 0$

OPERATION CONTROL OF
BLOWER TO COOL CONDENSER
$Ict = B$ and $VS < C \Rightarrow RUN$
$Ict = B$ and $VS \geqq C \Rightarrow STOP$
$Ict = m = 0 \Rightarrow STOP$

RETURN

# FIG. 3

START

READ DATA
Tet,Tin,Hin,Tamb,Rsun,Ne,VS

CALCULATION MEANS FOR
DISPLACEMENT CONTROL SIGNAL OF
AIR TEMPEARTURE AT EVAPORATOR EXIT
Ict=Ic_te

$Ict \leqq A$? — No

Yes

CALCULATION MEANS FOR
EXTERNAL INTERMITTENT CONTROL SIGNAL
OF VARIABLE DISPLACEMENT
B=f(Tamb,Tin,Hin,BLV,Rsun)

EXTERNAL INTERMITTENT CONTROL
OF VARIABLE DISPLACEMENT
Teva −Tet $\geqq$ diff ⇒ Ict=B START-UP
Teva −Tet $<$ 0 ⇒ Ict=m=0

OPERATION CONTROL OF
BLOWER TO COOL CONDENSER
Ict=B and VS $<$ C ⇒ RUN
Ict=B and VS $\geqq$ C ⇒ STOP
Ict=m=0 ⇒ STOP

RETURN

# FIG. 4

START

READ DATA
Tet,Tin,Hin,Tamb,Rsun,Ne,VS

CALCULATION MEANS FOR
DISPLACEMENT CONTROL SIGNAL OF
AIR TEMPERATURE AT EVAPORATOR EXIT
Ict=Ic_te

Ict$\leqq$A ? —No

Yes

CALCULATION MEANS FOR
EXTERNAL INTERMITTENT CONTROL SIGNAL
OF VARIABLE DISPLACEMENT
B=f(Tamb,Tin,Hin,BLV,Rsun)

EXTERNAL INTERMITTENT CONTROL
OF VARIABLE DISPLACEMENT
Teva — Tet $\geqq$ diff $\Rightarrow$ Ict=B START-UP
Teva — Tet $<$ 0 $\Rightarrow$ Ict=m=0

ESTIMATION MEANS FOR
COMPRESSOR TORQUE
Trq=f(Pd,Ict,Ne,VS,Tamb)

OPERATION CONTROL OF
BLOWER TO COOL CONDENSER
D=f(Trq,VS)
CFV=D

RETURN

## FIG. 5

## FIG. 6

| **INTERNATIONAL SEARCH REPORT** | International application No. |
|---|---|
| | PCT/JP2011/000986 |

**A. CLASSIFICATION OF SUBJECT MATTER**
*B60H1/32*(2006.01)i

According to International Patent Classification (IPC) or to both national classification and IPC

**B. FIELDS SEARCHED**

Minimum documentation searched (classification system followed by classification symbols)
B60H1/32

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2001-191789 A  (Toyoda Automatic Loom Works, Ltd.),<br>17 July 2001 (17.07.2001),<br>entire text; all drawings<br>& US 2001/0014287 A1    & EP 1116882 A2 | 1,2<br>3-9 |
| A | JP 2009-107605 A  (Sanden Corp.),<br>21 May 2009 (21.05.2009),<br>entire text; all drawings<br>(Family: none) | 1-9 |
| A | JP 3-63441 A  (Nippondenso Co., Ltd.),<br>19 March 1991 (19.03.1991),<br>entire text; all drawings<br>(Family: none) | 1-9 |

☒  Further documents are listed in the continuation of Box C.          ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    18 May, 2011 (18.05.11) | Date of mailing of the international search report<br>    31 May, 2011 (31.05.11) |
|---|---|
| Name and mailing address of the ISA/<br>    Japanese Patent Office | Authorized officer |
| Facsimile No. | Telephone No. |

Form PCT/ISA/210 (second sheet) (July 2009)

| | INTERNATIONAL SEARCH REPORT | International application No. |
|---|---|---|
| | | PCT/JP2011/000986 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-225418 A  (Sanden Corp.),<br>25 August 2005 (25.08.2005),<br>claims 1 to 5<br>& US 2007/0130975 A1     & EP 1717073 A1<br>& WO 2005/077687 A1 | 1-9 |
| A | JP 5-270255 A  (Sanden Corp.),<br>19 October 1993 (19.10.1993),<br>paragraphs [0002] to [0007], [0031] to [0041];<br>fig. 5<br>& JP 5-306261 A          & US 5315841 A<br>& EP 551008 A1           & DE 69208855 C<br>& DE 69208855 D | 1-4,9 |
| A | JP 2007-145223 A  (Sanden Corp.),<br>14 June 2007 (14.06.2007),<br>entire text; all drawings<br>(Family: none) | 1-4,9 |
| A | JP 2009-227193 A  (Denso Corp.),<br>08 October 2009 (08.10.2009),<br>paragraphs [0002] to [0007], [0037] to [0048]<br>(Family: none) | 1-4,9 |
| A | JP 7-266860 A  (Calsonic Corp.),<br>17 October 1995 (17.10.1995),<br>paragraphs [0061] to [0067]<br>& US 5560217 A          & EP 681933 A1<br>& DE 69507533 C          & DE 69507533 T | 5-8 |

Form PCT/ISA/210 (continuation of second sheet) (July 2009)

**EP 2 540 541 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003191741 A

- JP 2001073941 A